# EUROPEAN PATENT SPECIFICATION

(11) **EP 3 393 852 B1**
(45) Date of publication and mention of the grant of the patent: **02.09.2020**
(21) Application number: 16825377.1
(22) Date of filing: 20.12.2016
(51) Int. Cl.: B60P 1/64

(54) **GUIDANCE SYSTEM AND METHOD FOR PROVIDING GUIDANCE**
LEITSYSTEM UND LEITVERFAHREN
SYSTÈME DE GUIDAGE ET PROCÉDÉ DE FOURNITURE DE GUIDAGE

(30) Priority: 22.12.2015 GB 201522623
(43) Date of publication of application: 31.10.2018
(73) Proprietor: Hyva Holding BV, 2408 AK Alphen aan den Rijn (NL)
(72) Inventor: VERBEEK, Diederik Geert Femme, 2641VP Pijnacker (NL)
(74) Representative: Haseltine Lake Kempner LLP
(86) International application number: PCT/EP2016/081887
(87) International publication number: WO 2017/108764

(56) References cited:
- GB-A- 2 461 273
- US-A1- 2002 145 662
- US-A1- 2015 115 571

## Description

The invention relates to a method and system for providing guidance for the alignment of a moveable first coupling of a vehicle and a second coupling of a body. In particular, although not exclusively, the invention relates to a method and system for providing visual guidance for the alignment of the moveable hook of a hook loader vehicle and a bar provided on a container which is to be picked up.

Hook loader vehicles are known which can pick-up and haul a container onto the back of the vehicle. A hook loader vehicle typically comprises a driver cab, a main chassis and a pivotable arm having a hook. One or more hydraulic cylinders are provided which can be actuated to pivot the arm with respect to the main chassis. In order to pick up a container, the hook loader is reversed into a position in which it is in front of the container and substantially parallel to it. The driver must ensure that the vehicle is centrally located with respect to the container so that the hook is laterally aligned (i.e. aligned side-to-side) with a bar provided on the container. This is usually done by the driver using their wing mirrors to observe the position of the container, with the possible assistance of a co-worker. Once laterally aligned, the hydraulic cylinders are extended which causes the arm to pivot. The arm is pivoted to a position in which the hook is vertically aligned with the pick-up height of the bar. Even if the containers are always of the same type, the pick-up height may vary if, for example, the container is located on the back of a trailer, or if the container is on raised ground (e.g. on a kerb). Due to the location of the hook and arm, which are typically behind the driver's cab, it can be difficult for the operator to position the hook at the correct height. It may take a number of attempts for the operator to position the hook at the correct height. Further, since the pump of the actuation system for the hydraulic cylinder is typically driven by the engine of the vehicle, it may not be possible to drive and move the arm/hook at the same time. This may make positioning the hook at the correct height time consuming. Once the hook has been located at the correct vertical position, the vehicle is reversed towards the container, and the hydraulic cylinders are retracted to pivot the arm. If the hook is at the correct height, when the arm is pivoted the hook engages with the bar and hauls the container onto the back of the vehicle.

US 2015/115571 A1 discloses a system and method for providing visual assistance through a graphic overlay super-imposed on a back-up camera image for assisting a vehicle operator when backing up a vehicle to align a tow ball with a trailer tongue.

It is desirable to provide a guidance system and method for providing guidance for the vertical alignment of a first coupling, such as a hook, and a second coupling, such as a bar.

According to an aspect there is provided a method for providing guidance for the alignment of a moveable first coupling of a vehicle and a second coupling of a body, the vehicle having a longitudinal axis, the method comprising: capturing an image which includes the second coupling using an image capturing device fixed with respect to the vehicle and laterally offset with respect to the first coupling; and displaying the image together with a coupling alignment guide which is aligned with a first point which is at a predefined position with respect to the image. The first and second couplings may be arranged to engage with one another. The vehicle may be arranged to pick up the body. The moveable first coupling may be moveable with respect to the vehicle body or chassis. The method may be for providing guidance for the vertical alignment of the first coupling and the second coupling.

The image capturing device may be offset in a direction parallel to a transverse axis. The image capturing device may be offset by at least 0.25m, at least 0.5m, or at least 1m. The start of the optical axis (defined by the lens and image sensor) may be laterally offset. That is to say, the "eye" of the image capturing device may be laterally offset.

The coupling alignment guide may be added to the image displayed and may therefore form an augmented reality display. The coupling alignment guide may be overlaid on the image. The coupling alignment guide may be in the form of a line, such as a dotted line, or a series of dots, or crosses, for example. The coupling alignment guide may be a graphical guide.

The coupling alignment guide may be based on a motion perspective line. The coupling alignment guide may be aligned with the first point in as much as if extended the coupling alignment guide would pass through the first point.

The first point may lie within or outside of the image. The first point may be fixed for the particular set-up, or it may be predefined so that its position is always known. The first point may be a vanishing point of the image, such as a motion perspective vanishing point.

A motion perspective line is defined as a path on a displayed image which a fixed point in space follows as the image capturing device, which is capturing the image, moves along a fixed axis. In certain embodiments the fixed axis along which the image capturing device moves is the longitudinal axis of the vehicle as the vehicle is driven in a straight line forwards and/or backwards. A motion perspective vanishing point is defined as a fixed point to which all motion perspective lines converge. Motion perspective lines and the motion perspective vanishing point are a function of the relative orientations of the optical axis of the image capturing device, the fixed movement axis along which the image capturing device moves (which may be the longitudinal axis of the vehicle if it is driven forwards/backwards), and the image capturing device itself. The motion perspective lines and the motion perspective vanishing points may be fixed for a particular axis of movement. The motion perspective lines and/or the motion perspective point used may be based on an image capturing device movement axis that is parallel to a plane within which the first coupling can move. In other words, the motion perspective lines and/or the motion perspective point used may be based on an image capturing device movement axis that is perpendicular to the pivot axis of an arm to which the first coupling is attached. The image capturing device movement axis may be parallel to the longitudinal axis of the vehicle.

The or each coupling alignment guide may be linear (i.e. straight) or it could be curved to compensate for any distortion created by the image capturing device. The or each coupling alignment guide may be based on curved motion perspective lines. The coupling alignment guide may be corrected for image capturing device lens distortion. In another embodiment, the image displayed may be corrected for lens distortion. In other words, the image displayed may be corrected to produce a true perspective image. This may allow one or more linear (straight) coupling alignment guides to be used.

The displayed image and/or the coupling alignment guide may be corrected to compensate for lens distortion of the image capturing device. The displayed image may be corrected, the coupling alignment guide may be corrected or both may be corrected. Any correction may ensure that the virtual coupling alignment guide displayed with the image captured represents a line in space of constant height.

The coupling alignment guide may also be aligned with a second point in the image which corresponds to the position of the second coupling. The coupling alignment guide may be aligned with the second point in as much as if extended the coupling alignment guide would pass through the second coupling. The second point may be manually identified. The second point may be manually selected by using an operator input device, for example by selecting a point on a display. The second point may be automatically identified, for example, by using an image recognition technique. The second point may be automatically identified using an identifier provided on the body. The marker could be a graphical marker provided on the body.

The method may further comprise displaying an initial coupling alignment guide which is aligned with the first point, and moving the coupling alignment guide until it is also aligned with the second point. The coupling alignment guide may be moved using an operator input device, such as a rotatable dial or one or more buttons.

The method may further comprise displaying an initial coupling alignment guide which is aligned with the first point and a third point in the image which corresponds to the position of the first coupling, and moving the coupling alignment guide in response to movement of the first coupling until the coupling alignment guide is also aligned with the second point. The coupling alignment guide may be aligned with the first, second and/or third point in as much as if extended the coupling alignment guide would pass through the first point and/or first coupling and/or second coupling. The third point may be manually identified. The third point may be manually selected by using an operator input device, for example by selecting a point on a display. The third point may be automatically identified, for example, by using an image recognition technique. The third point may be automatically identified using an identifier provided on the first coupling. The marker could be a graphical marker provided on the first coupling.

The method may further comprise displaying a plurality of coupling alignment guides which are each aligned with the first point. One of the plurality of coupling alignment guides may be aligned with a second point in the image which corresponds to the position of the second coupling. All of the coupling alignment guides could be based on a motion perspective line.

The method may further comprise moving the first coupling into alignment with the coupling alignment guide to position the first coupling at the correct pick-up height for the second coupling.

The first coupling may be moved using an operator input device. The first coupling may be automatically moved.

The method may further comprise driving the vehicle into a position in which the first and second couplings are laterally aligned.

The method may further comprise: capturing an image which includes at least a part of the body using an image capturing device fixed with respect to the vehicle; and displaying the image together with a lateral alignment guide which is alignable with a predefined position on the body to laterally align the first and second couplings. There could be a single image capturing device, or multiple image capturing devices. The lateral alignment guide may be at a fixed position. The predefined position could be marked using a graphical marker on the body.

The method may further comprise driving the vehicle into a position in which the lateral alignment guide is aligned with the predefined position on the body. The lateral alignment guide may be aligned with a lateral alignment mark (e.g. a graphical marker) provided on the body. The vehicle may be driven into a position in which the longitudinal axes of the vehicle and body are substantially parallel.

The optical axis of at least one, or the or each, image capturing device may be oblique to the longitudinal axis of the vehicle. At least one, or the or each, image capturing device may be rearwardly facing with respect to the forward driving direction of the vehicle.

The first coupling may be moveable but constrained in the lateral direction. The first coupling may be moveable with respect to the vehicle chassis. The first coupling may be moveable only in directions parallel to a plane which includes the longitudinal axis of the vehicle and which is perpendicular to the transverse axis of the vehicle. The first coupling may be attached to the end of a moveable arm. The moveable arm may be pivotally attached to the vehicle chassis about a pivot axis that is parallel to the transverse axis of the vehicle. The vehicle may be arranged to lift and/or haul the body onto the vehicle chassis. The vehicle may be a hook loader vehicle. The vehicle may have a hook as the first coupling. The body may be a container. The body may have a bar as the second coupling.

According to an aspect there is provided a guidance system for providing guidance for the alignment of a moveable first coupling of a vehicle and a second coupling of a body, the vehicle having a longitudinal axis, the system comprising: an image capturing device arranged to be fixed with respect to the vehicle such that it is laterally offset with respect to the first coupling and arranged to capture an image which includes the second coupling; a coupling visual guidance module arranged to generate a coupling alignment guide which is aligned with a first point which is at a predefined position with respect to the image; and a display arranged to display the image and the coupling alignment guide. The first point may be a vanishing point of the image.

The coupling visual guidance module may be arranged to generate a coupling alignment guide which is also aligned with a second point in the image which corresponds to the position of the second coupling. The system may further comprise an operator input device for manually identifying the second point. The system may further comprise an operator input device for manually selecting the second point. The system may further comprise an automatic identification module arranged to automatically identify the second point. The automatic identification module may be arranged to automatically identify the second point based on an identifier provided on the body.

The coupling visual guidance module may be arranged to generate an initial coupling alignment guide which is aligned with the first point. The system may further comprise an operator input device for moving the coupling alignment guide until it is also aligned with the second point.

The coupling visual guidance module may be arranged to generate an initial coupling alignment guide which is aligned with the first point and a third point on the image which corresponds to the position of the first coupling. The coupling visual guidance module may be arranged to be responsive to an operator input device for moving the first coupling such that, in use, the coupling alignment guide moves in response to movement of the first coupling. The system may further comprise an operator input device for manually identifying the third point. The system may further comprise an operator input device for manually selecting the third point. The system may further comprise an automatic identification module arranged to automatically identify the third point. The automatic identification module may be arranged to automatically identify the third point based on an identifier provided on the first coupling.

The coupling visual guidance module may be arranged to generate a plurality of coupling alignment guides which are each aligned with the first point. One of the plurality of coupling alignment guides may be aligned with a second point in the image which corresponds to the position of the second coupling.

The system may further comprise an operator input device for moving the first coupling into alignment with the coupling alignment guide to position the first coupling at the correct pick-up height for the second coupling. The system may further comprise an automatic movement module for automatically moving the first coupling into alignment with the coupling alignment guide to position the first coupling at the correct pick-up height for the second coupling.

The system may further comprise: an image capturing device arranged to be fixed with respect to the vehicle and arranged to capture an image which includes at least a part of the body; a lateral visual guidance module arranged to generate a lateral alignment guide which is alignable with a predefined position on the body to laterally align the first and second couplings; and wherein the display is arranged to display the image and the lateral alignment guide.

According to another aspect there is provided a vehicle for picking up a body comprising a moveable first coupling arranged to cooperate with a second coupling of the body to be picked up, wherein the vehicle is provided with a guidance system in accordance with any statement herein.

An image capturing device may be mounted to the vehicle and laterally offset with respect to the first coupling. The or each image capturing device may be fixedly mounted to the vehicle. The or each capturing device may be mounted to the vehicle such that the optical axis of at least one image capturing device is oblique to the longitudinal axis of the vehicle. Alternatively, the optical axis of the or each or at least one image capturing device may be parallel to the longitudinal axis of the vehicle. At least one image capturing device may be mounted to the vehicle such that it is rearwardly facing.

The first coupling may be moveable with respect to the vehicle chassis. The first coupling may be moveable only in directions parallel to a plane which includes the longitudinal axis of the vehicle and which is perpendicular to the transverse axis of the vehicle. The first coupling may be attached to the end of a moveable arm.

The vehicle may be arranged to lift and/or haul the body onto the vehicle chassis. The vehicle may be a hook loader vehicle. The vehicle may have a hook as the first coupling. The vehicle may be arranged to pick up a body in the form of a container. The body may have a bar as the second coupling.

According to an aspect there is provided a method for providing guidance for the alignment of a moveable first coupling of a vehicle and a second coupling of a body, the vehicle having a longitudinal axis, the method comprising: capturing an image using an image capturing device fixed with respect to the vehicle and laterally offset with respect to the first coupling; and displaying the image together with a coupling alignment guide which corresponds to the pick-up height of the second coupling at the lateral position of the second coupling.

The position of the coupling alignment guide may be based on a first point which is at a predefined position with respect to the image. The coupling alignment guide may be aligned with a first point which is at a predefined position with respect to the image. The first point may be in the image. The first point may be based on at least the relative orientations of the longitudinal axis of the vehicle and the optical axis of the image capturing device. The first point may correspond to the projection of the vehicle's motion direction onto the image. The first point may be a motion perspective vanishing point. The position of the coupling alignment guide may be based on a second point which corresponds to the position of the second coupling. The coupling alignment guide may be aligned with a second point in the image which corresponds to the position of the second coupling.

According to an aspect there is provided a guidance system for providing guidance for the alignment of a moveable first coupling of a vehicle and a second coupling of a body, the vehicle having a longitudinal axis, the system comprising: an image capturing device arranged to be fixed with respect to the vehicle such that it is laterally offset with respect to the first coupling; a coupling visual guidance module arranged to generate a coupling alignment guide which corresponds to the pick-up height of the second coupling at the lateral position of the second coupling; and a display arranged to display the image and the coupling alignment guide.

The coupling visual guidance module may be arranged to generate the position of the coupling alignment guide is based on a first point which is at a predefined position with respect to the image. The coupling alignment guide may be aligned with a first point which is at a predefined position with respect to the image. The first point may be in the image. The first point may be based on at least the relative orientations of the longitudinal axis of the vehicle and the optical axis of the image capturing device. The first point may correspond to the projection of the vehicle's motion direction onto the image. The first point may be a motion perspective vanishing point. The position of the coupling alignment guide may be based on a second point which corresponds to the position of the second coupling. The coupling visual guidance module may be arranged to generate a coupling alignment guide which is also aligned with a second point in the image which corresponds to the position of the second coupling.

According to an aspect there is provided a method for providing guidance for the alignment of a moveable first coupling of a vehicle and a second coupling of a body, the vehicle having a longitudinal axis, the method comprising: capturing an image using an image capturing device fixed with respect to the vehicle and laterally offset with respect to the first coupling; and displaying the image together with a coupling alignment guide which is based on a motion perspective line aligned with a point in the image which corresponds to the position of the second coupling.

The motion perspective line may be based on at least the relative orientations of the longitudinal axis of the vehicle along which it is driven and the optical axis of the image capturing device. A motion perspective line may be the path on the image that a fixed point follows as the vehicle moves in a longitudinal direction. The motion perspective line may be based on a first point which is at a predefined position with respect to the image. The first point may correspond to the projection of the vehicle's motion direction onto the image. The first point may be a motion perspective vanishing point.

According to an aspect there is provided a guidance system for providing guidance for the alignment of a moveable first coupling of a vehicle and a second coupling of a body, the vehicle having a longitudinal axis, the system comprising: an image capturing device arranged to be fixed with respect to the vehicle such that it is laterally offset with respect to the first coupling; a coupling visual guidance module arranged to generate a coupling alignment guide which is based on a motion perspective line aligned with a point in the image which corresponds to the position of the second coupling; and a display arranged to display the image and the coupling alignment guide.

The motion perspective line may be based on at least the relative orientations of the longitudinal axis of the vehicle and the optical axis of the image capturing device. A motion perspective line may be the path on the image that a fixed point follows as the vehicle moves in a longitudinal direction. The motion perspective line may be based on a first point which is at a predefined position with respect to the image. The first point may correspond to the projection of the vehicle's motion direction onto the image. The first point may be a motion perspective vanishing point.

The invention may comprise any combination of the features and/or limitations referred to herein, except combinations of such features as are mutually exclusive.

Embodiments of the invention will now be described, by way of example, with reference to the accompanying drawings, in which:
Figure 1 schematically shows a hook loader vehicle and a container with the container resting on the ground;
Figure 2 schematically shows a perspective view of a hook loader and a container;
Figure 3 schematically shows the hook loader vehicle of Figure 1 with the container partially hauled onto the back of the vehicle;
Figure 4 schematically shows the hook loader vehicle of Figures 1 and 2 with the container fully hauled onto the back of the vehicle;
Figure 5 schematically shows a perspective view of the back of the hook loader vehicle;
Figure 6 schematically shows an image captured by a camera of a guidance system;
Figure 7 schematically shows a plan view of a hook loader vehicle and a container;
Figure 8 schematically shows the various components of the guidance system;
Figure 9 schematically shows the display of the guidance system with an initial coupling alignment guide line displayed over the captured image;
Figure 10 schematically shows the display of the guidance system with a correctly positioned coupling alignment guide line displayed over the captured image;
Figure 11 schematically shows a perspective view of the rear of the hook loader vehicle and the front of a container;
Figure 12 schematically shows the display of the guidance system with a correctly positioned coupling alignment guide line displayed over the captured image and with the hook aligned with the guide line;
Figure 13 schematically shows the display of the guidance system with an initial coupling alignment guide line which is aligned with the hook displayed over the captured image; and
Figure 14 schematically shows the display of the guidance system with a plurality of coupling alignment guide lines.

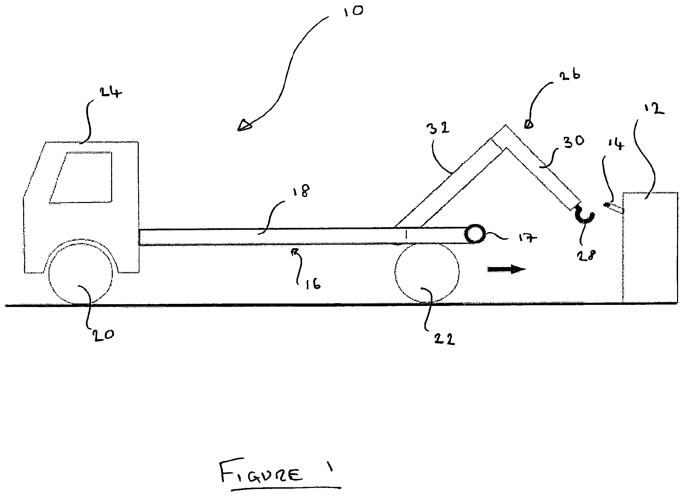

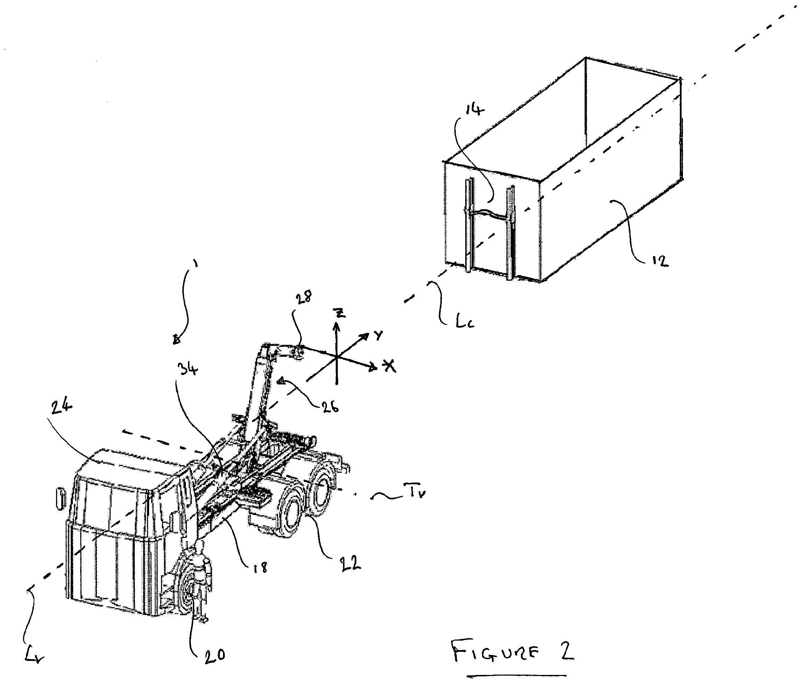

**Figures 1** **and** **2** shows a hook loader vehicle 10 which is used to pick up and haul a container 12 onto the vehicle 10. The vehicle 10 comprises a main chassis 16 which defines a substantially flat bed 18 onto which the container 12 can be hauled. The vehicle 10 also comprises front and rear wheels 20, 22 and a cab 24 including the engine. The vehicle 10 has a longitudinal axis L_{V} (front to rear) along which the vehicle is drivable. The longitudinal axis is perpendicular to the axes of the wheels 20, 22. The vehicle 10 also has a transverse axis T_{V} (side to side) which is parallel to both wheel axes. The vehicle 10 comprises an L-shaped arm 26 which is attached to the chassis 16 behind the cab 24 and which comprises a first L-shaped member 30 and a second member 32. The end of the second member 32 is pivotably attached to the chassis 16 about a pivot axis that is parallel to the transverse axis. One end of the L-shaped first member 30 is provided with a hook 28, and the other end of the L-shaped first member 30 is slidable within the second member 32. The arm 26 is constrained to pivot in a vertical plane that includes the longitudinal centre line of the vehicle 10 and which the transverse axis is perpendicular to. This means that arm 26 and hook 28 are laterally constrained (i.e. prevented from moving sideways) so that they can only move in directions parallel to the plane which includes the longitudinal central axis of the vehicle 10 and which is perpendicular to the transverse axis. Although not shown in Figure 1, two parallel hydraulic cylinders 34 are coupled between the arm 26 and the chassis 16 and can be actuated to pivot the arm 26. The rear of the chassis 16 is also provided with one or more roller elements 17 which are rollable about an axis parallel to the transverse axis.

In order to pick up a container 12, the vehicle 10 is driven into a position in which the longitudinal axis L_{V} of the vehicle 10 and the longitudinal axis L_{C} container 12 are substantially parallel to one another. The vehicle 10 is also positioned such that the arm 26 and hook 28 are laterally aligned with a pick-up bar 14 provided on the front of the container 12. In this embodiment, the arm 26 and hook 28 are aligned with the longitudinal centreline of the vehicle 10 in the transverse direction, and the bar 14 is aligned with the longitudinal centreline of the container 12 in the transverse direction. Thus, the vehicle 10 is driven into a position in which the longitudinal centreline of the vehicle 10 and the longitudinal centreline of the container 12 are aligned with one another. This ensures that the hook 28 and bar 14 are located in the same position along a transverse axis (i.e. they are aligned sideways). The hydraulic cylinders 34 are then extended to pivot the arm 26 away from the chassis 16 (clockwise in Figure 1) and into a position in which the hook 28 is vertically aligned with the pick-up height of the bar 14. The vehicle 10 is then driven backwards until the hook 28 is close enough to the bar 14. In this embodiment, and as shown in Figure 2, the lateral alignment is along the X axis (transverse axis), the height or vertical alignment is along the Z axis (vertical axis), and the distance alignment is along the Y axis (longitudinal axis and driving direction).

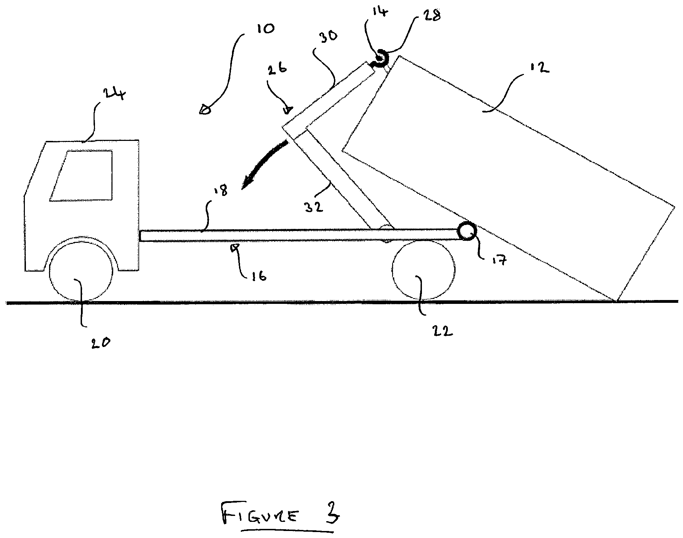

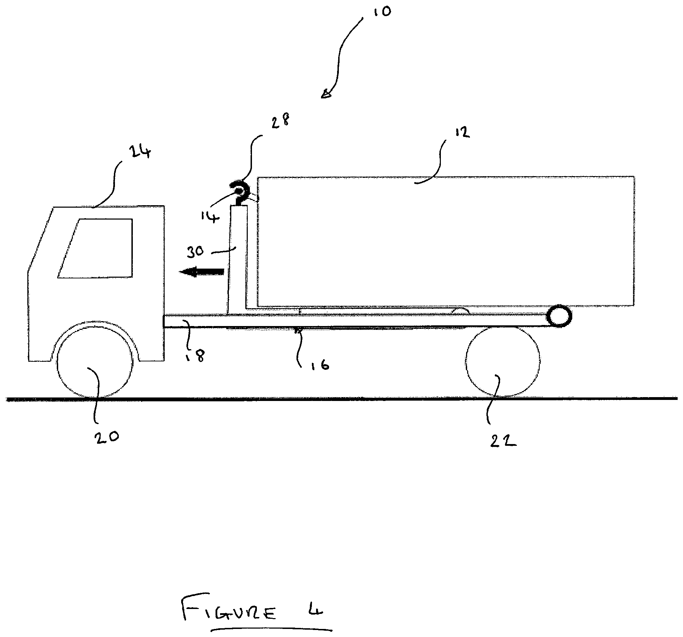

Referring to **Figure 3****,** when the hook 28 and bar 14 are both laterally and vertically aligned, the hydraulic cylinders 34 are retracted which causes the arm 26 to pivot towards the chassis 16 (anti-clockwise in Figure 2). As the arm 26 is pivoted the hook 28 engages with the bar 14 of the container. Further pivoting of the arm 26 causes the container 12 to be pulled forwards and upwards such that the rear edge of the container 12 rests on the ground, and such that the lower surface of the container 12 rests on the roller elements 17. As shown in **Figure 4****,** yet further retraction of the hydraulic cylinders 34 causes the container 12 to be pulled or hauled onto the back of the vehicle 10 such that it rests on the bed 18. In order to fully pull the container 12 onto the vehicle 10 the L-shaped first member 30 is slid out of the second member 32 in an axial direction to pull the container forwards onto the bed 18. Once in position, the container 12 may be secured in place using a locking device.

As will be described in detail below, the hook loader vehicle 10 is provided with a guidance system for assisting the driver in positioning the pick-up hook 28 at the correct vertical position (Z position) and lateral position (X position) so that it can engage with the bar 14.

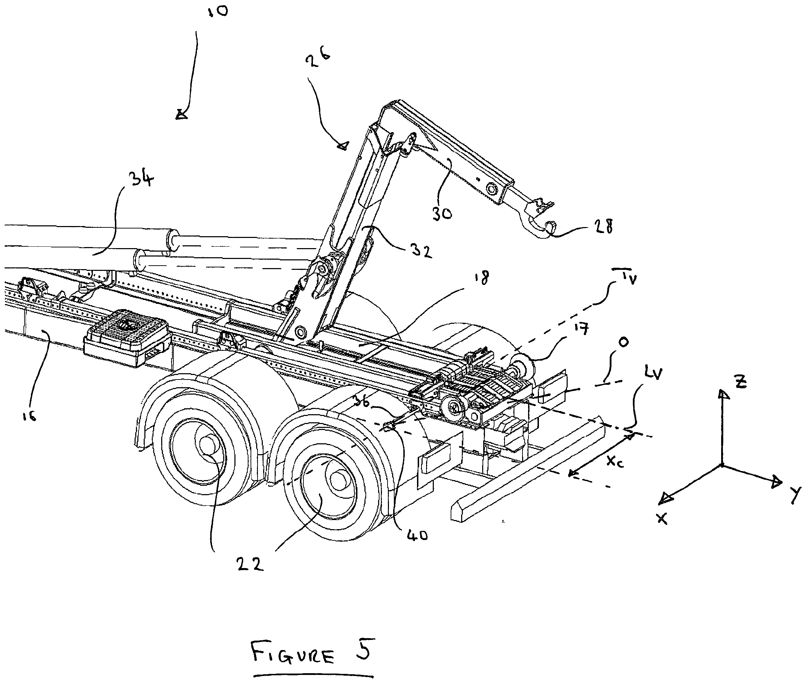

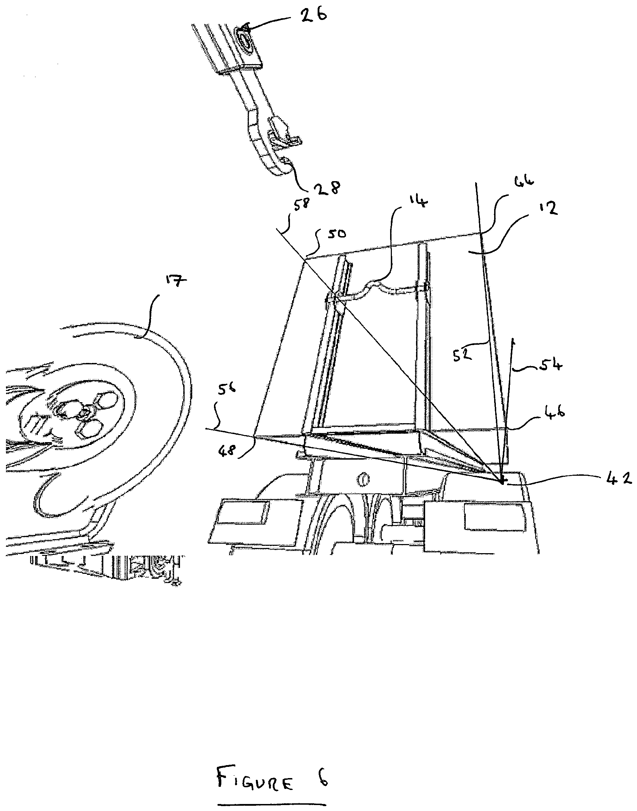

Referring to **Figure 5****,** the guidance system 38 comprises an image capturing device in the form of a digital camera 40 that is fixedly mounted to the vehicle 10. The camera 40 is attached to a support arm 36 that transversely extends from the rear of the main chassis 16 in a direction parallel to the transverse axis Tv. This means that the camera 40 is laterally offset from the arm 26 and the hook 28 in a direction parallel to the transverse axis T_{V}. In other words, whilst in this embodiment the arm 26 and hook 28 are located along the longitudinal centreline of the vehicle 10, the camera 40 is located at a position in which it is offset from the longitudinal centreline of the vehicle such that it is laterally spaced from the arm 26 and hook 28 by an offset Xc. The camera 40 faces rearwards (i.e. in a direction opposite to the forward driving direction of the vehicle 10) and is angled upwards and inwards. As shown in **Figure 6****,** the camera 40 is angled upwards and inwards such that when the vehicle 10 is close enough and laterally aligned with a container 12 to be picked-up the camera 40 captures an image of the bar 14, and the hook 28 can be moved into a position in which an image of it can be captured by the camera 40. The optical axis O of the camera is therefore oblique to the longitudinal axis and has a component in the X, Y and Z axes. The lateral offset of the image capturing device 40 is defined by the lateral distance (in the X direction) between the start of the optical axis (defined by the image sensor and the optical lens) and the vertical plane parallel to the longitudinal axis and including the centreline of the hook. Offsetting the camera 40 in the lateral (X) direction allows the camera to capture an image of both the bar 14 and the hook 28.

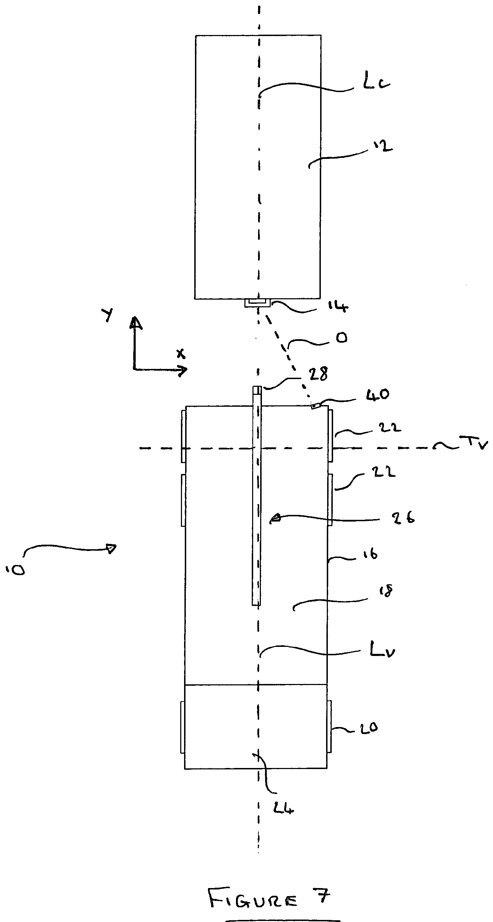

With reference to **Figure 7****,** in this embodiment the camera 40 has a fixed focal length and therefore does not have an optical zoom. Further, the position and orientation of the camera 40 is fixed with respect to the vehicle chassis 16. As the vehicle 10 is driven in a straight line along the longitudinal axis L_{V} of the vehicle 10, there is a point at a predefined position with respect to the image (which may be within the captured image or outside the captured image) which can be termed the motion perspective vanishing point 42. The precise position of the motion perspective vanishing point 42 is a function of the relative positions and orientations of the optical axis, the longitudinal axis Lv along which the vehicle 10 is driven, and the camera 40. The motion perspective vanishing point 42 is the point towards which all motion perspective lines converge. A motion perspective line is defined as the path that each point in the image follows on a display as the vehicle 10 is driven forwards/backwards in a straight line along the longitudinal axis L_{V}. For example, if four fixed points in the environment are taken, such as the top right 44, bottom right 46, bottom left 48 and top left corners 50 of the container 12, as the vehicle is driven towards the container 12 these fixed point will move outwards on the image along four distinct motion perspective lines 52, 54, 56, 58 which all converge towards a single point known as the motion perspective vanishing point 42. Similarly, as the vehicle 10 is driven away from the container 12 the points 44, 46, 48, 50 move inwards along the motion perspective lines 52, 54, 56, 58. In the arrangement shown the motion perspective lines are linear, but they could be curved depending on the configuration of the camera 40. The motion perspective vanishing point 42 is defined as the lens projection of the driving direction onto the image sensor of the camera 40. In this embodiment, when the camera 40 is fixed to the vehicle 10 and the vehicle 10 is driving in a straight line along the longitudinal axis, the position of the motion perspective vanishing point 42 is fixed. Therefore, the motion perspective vanishing point 42 can be predetermined (or pre-set) for the particular set-up.

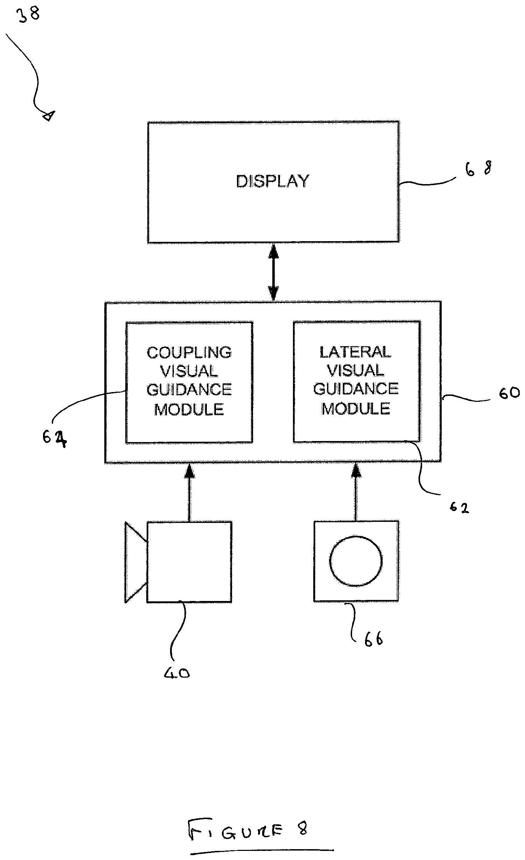

With reference to **Figure 8****,** in addition to the camera 40, the guidance system 38 comprises a number of other components including a processing module 60, comprising a lateral visual guidance module 62 and a coupling visual guidance module 64, an operator input device such as a rotatable dial 66, and a touch-screen display 68. The processing module 60 is connected to the camera 40 such that it can receive live image data captured by the camera 40, and is also connected to the dial 66 and the touch-screen display 68 which also acts as an operator input device. The various components may be connected either wirelessly or with wires. The touch-screen display 68 and the dial are mounted within the cab 24. The processing module 60 may be located in any suitable location. As will be explained in detail below, the lateral visual guidance module 62 is arranged to generate a lateral alignment guide line for assisting in laterally aligning the hook 28 with the bar 14, and the coupling visual guidance module 64 is arranged to generate a coupling alignment guide line for assisting in vertically aligning the hook 28 with the bar 14. The display 68 is arranged to display the live image captured by the camera 40, together with a coupling alignment guide line and a lateral alignment guide line which are overlaid onto the captured image to form an augmented reality display.

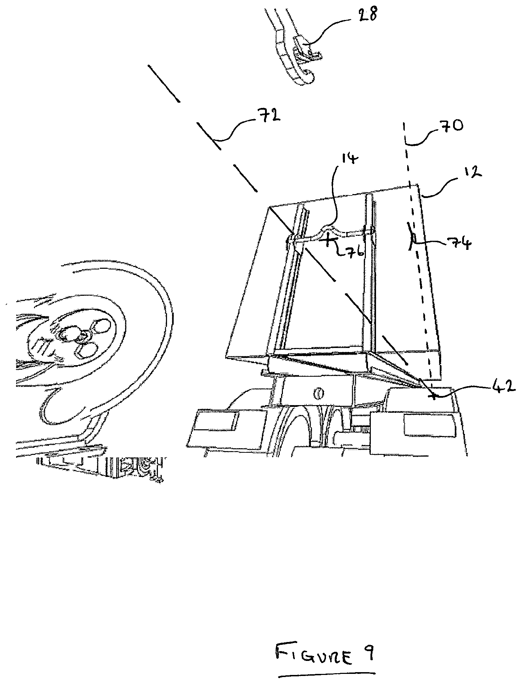

Referring to **Figure 9****,** in use, the display 68 displays the live image captured by the camera 40 together with a fixed lateral alignment guide line 70 and an initial coupling alignment guide 72. The lateral alignment guide line 70 is a line that is fixed with respect to the frame of the image so that it is always at the same position within the image. The lateral alignment guide line 70 assists the operator in driving the vehicle 10 into a position in which the hook 28 and bar 14 are laterally aligned in the X direction. A lateral alignment mark 74 is provided on the front face of the container 12, and the driver drives the vehicle into a position in which the virtual lateral alignment guide line 70 is aligned with the lateral alignment mark 74. When the lateral alignment guide line 70 is aligned with the lateral alignment mark 74, then the hook 28 and bar 14 are laterally aligned in the X direction. In this embodiment, the lateral distance between the lateral alignment mark 74 and the centre of the bar 14 is the same as the lateral offset Xc between the camera 40 and the hook 28. This means that the lateral alignment guide line 70 is fixed with respect to the image frame.

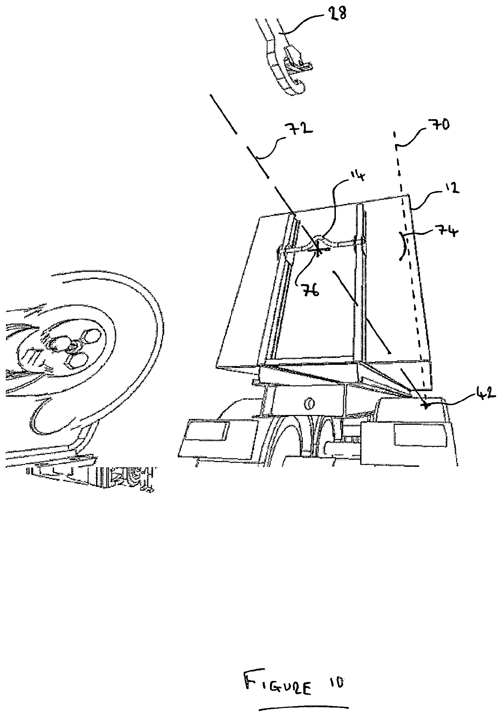

The initial coupling alignment guide line 72 is based on a motion perspective vanishing line and is therefore generated based on a first predefined point in the image which in this embodiment is the fixed motion perspective vanishing point 42. The position of this first point with respect to the image frame is predefined and is stored in the coupling visual guidance module 64. The initial coupling alignment guide line 72 is a motion perspective line and therefore it converges and is aligned with the first predefined point 42. As shown in Figure 9, the initial coupling alignment guide line 72 may not necessarily be aligned with the bar 14. In order to locate the coupling alignment guide line 72 at the correct position it must be moved such that it is aligned with a second point in the image which corresponds to the location of the bar 14. In this embodiment, a marker 76 is provided on the front face of the container 12 at a position corresponding to the pick-up height for the bar (i.e. the location of the bar). In order to correctly position the coupling alignment guide line 72 the operator turns the dial 66 which causes the virtual coupling alignment guide line 72 to move whilst remaining aligned with the first point 42. As shown in **Figure 10****,** the operator uses the dial 66 to position the coupling alignment guide line 72 at a position in which it is aligned with a second point on the image corresponding to the location of the bar 14, which in this embodiment is represented by the marker 76.

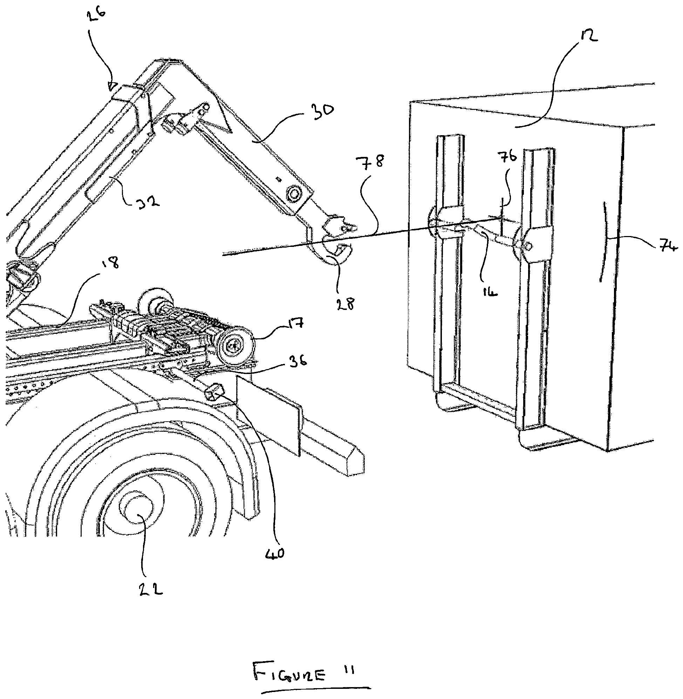

The coupling alignment guide line 72 aligned with both the first point 42 on the image and the second point on the image that represents the location of the bar 14 is a motion perspective line. Therefore, all points located on that line will follow the line as the camera 40 is moved along a longitudinal axis as the vehicle 10 is driven forwards and backwards. As shown in **Figure 11****,** the coupling alignment guide line 72 is a two-dimensional representation of a virtual pick-up line 78 that is located in a three dimensional space (i.e. within the environment). The pick-up line 78 is at a constant height (i.e. the Z component is constant) which corresponds to the pick-up height of the bar 14. Further, the pick-up line 78 is laterally aligned with the bar 14 and is parallel to the longitudinal axes of the vehicle 10 and container 12 (i.e. the Z component is constant).

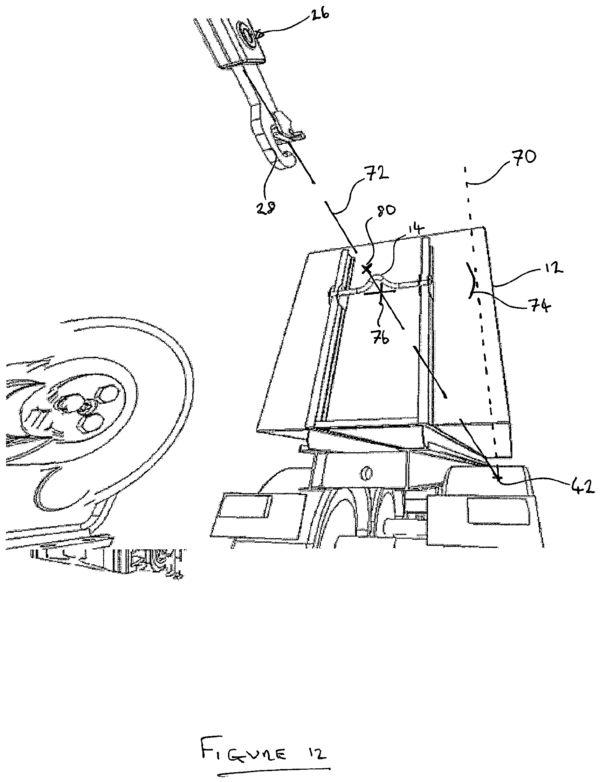

Since the hook 28 and bar 14 have already been laterally aligned (i.e. they are at the same position in the X dimension) by appropriate positioning of the vehicle 10 with respect to the container 14, the coupling alignment guide line 72 displayed on the screen can be used to guide the operator to position the hook 28 at the correct pick-up height so that it is vertically aligned with the hook (i.e. so they are at the same position in the Z dimension). Specifically, referring to Figure 12, in order to position the hook 28 at the correct pick-up height, the hydraulic cylinders 34 are actuated to move the arm 26 until the hook 28 is aligned with the coupling alignment guide line 72. Providing the hook 28 and bar 14 are laterally aligned in the X direction by appropriate positioning of the vehicle 10 with respect to the container 12, when the hook 28 is aligned with the coupling alignment guide line 72 (which is a motion perspective line aligned with the first predefined point 42 and the bar 14) the hook 28 and bar 14 will also be vertically aligned in the Z direction. Therefore, with the hook 28 aligned with the coupling alignment guide line 72, it can be ensured that the hook 28 is at the correct pick-up height for the bar 14.

Once the hook 28 has been appropriately positioned, the vehicle 10 is driven backwards towards the container 10. This causes the hook 28 to move along the pick-up line 74 in space (Figure 11), and therefore it will move along the coupling alignment guide line 72 on the display 68. When the hook 28 is close enough to the bar 14 (e.g. when it engages with the bar 14) the driver stops the vehicle 10. The hydraulic cylinders 34 are then actuated which causes the hook 28 to engage with the bar 14; hauling the container 12 onto the bed 18 of the vehicle 10. In order to determine when the hook 28 is close enough to the bar 14, a marker 80 could be provided on the coupling alignment guide line 72 at a position such that when the hook 28 coincides with the marker 80 it is at the correct position in the Y direction. Alternatively, a proximity sensor (e.g. an ultrasonic sensor) could be used to indicate when the vehicle 10 is positioned at the correct distance away from the container 12 for the hook 28 to be spaced from the bar 14 by the correct distance in the Y direction.

The guidance system 38 allow the operator (i.e. the driver) to easily position the hook 28 at the correct position in space so that it can be engaged with the bar 14 to pick up the container. The system 38 allows the hook 28 to be easily positioned at the correct pick-up height regardless of the height of the bar 14 (e.g. if the container 12 is raised).

It should be appreciated that the coupling alignment guide line 72 could be displayed at the correct position in other suitable ways. For example, as opposed to using a dial 66 to rotate (or pivot) the coupling alignment guide line 72, the operator could use buttons provided on the touch-screen display 68 to move it to the correct position. In another embodiment the operator could select a point on the displayed image using the touch-screen 68 (or other input such as a track-pad or mouse) corresponding to the position of the bar 14 (e.g. the operator could select the marker 76 on the image). This could cause the coupling alignment guide line 72 to move to the correct position. In another arrangement, before displaying any coupling alignment guide line 72 the operator could be prompted to select the bar 14 (or marker) on the image and once selected the coupling alignment guide line 72 could be displayed such that as soon as it is displayed it is aligned with both the first point 42 and a point on the image that represents the position of the bar 14. In yet another embodiment, the system 38 may be able to automatically detect the position of the bar 14 using an image recognition technique. For example, the operator may press a button to create the coupling alignment guide line 72 and the processor 62 may detect the marker 76 and create a coupling alignment guide line 72 based on a motion perspective line aligned with this detected marker 76 representing the bar 14.

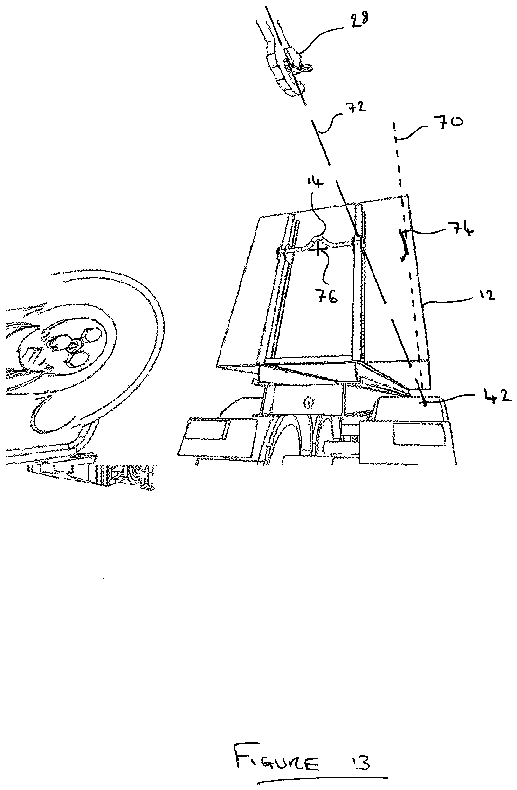

Referring to **Figure 13****,** in another embodiment, an initial coupling alignment guide line 72 is displayed over the captured image which is aligned with both the first point 42 and the hook 28. In use, the operator is prompted to select a point on the image which corresponds to the location of the hook 28. This causes an initial coupling alignment guide line 72 to be created which is a motion perspective line. In another embodiment, the system 38 may be able to automatically detect the position of the hook 28 using an image recognition technique. For example, the operator may press a button to create the initial coupling alignment guide line 72 and the processor 60 may detect a marker provided on the hook 28 and create a coupling alignment guide line 72 aligned with this detected marker (representing the hook 28) and the motion perspective vanishing point 42. Alternatively, the position of the hook 28 could be calculated from parameters relating to the position of the arm 26 (e.g. the pivot angle of the arm 26, the angle of the hook 28 with respect to the arm (knuckle angle) and/or the extension of the first L-shaped member 30 and the second member 32 of the arm). The parameters could be measured using sensors provided on the vehicle 10.

Using the controls for the hydraulic cylinder 34 the operator then moves the hook 28 to align it with the bar 14. The coupling alignment guide line 72 is constrained to remain aligned with both the hook 28 and the first point 42, and therefore as the arm 26 is lowered, the coupling alignment guide line 72 moves with movement of the hook 28. With reference to Figure 12, the hook 28 is lowered (or raised as the case may be) until the coupling alignment guide line 72 is also aligned with a point on the image which corresponds to the location of the bar 14 (i.e. the marker 76). When the coupling alignment guide line 72 (which is based on a motion perspective line) is aligned with both the hook 28 and bar 14, it is known that the hook 28 and bar 14 are at the same height (Z position), assuming that the hook 28 and bar 14 are also laterally aligned (X position). As in the embodiment described above, once aligned, the vehicle 10 can then be driven backwards until it is close enough to the container 12, and then the hydraulic cylinders 34 can be operated to cause the hook 28 and bar to engage so as to haul the container 12 onto the back of the vehicle 10.

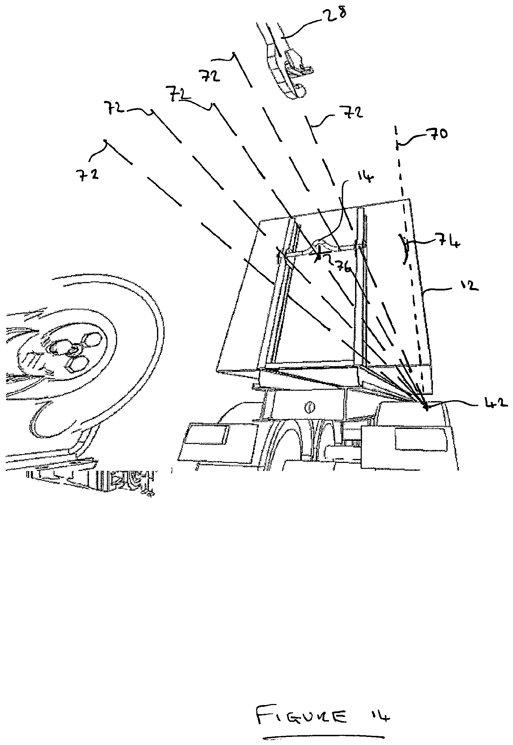

Referring to **Figure 14****,** in another embodiment, a plurality of coupling alignment guide lines 72 are displayed over the captured image. Each coupling alignment guide line 72 is based on a motion perspective line and therefore each is aligned with the motion perspective vanishing point 42. The coupling alignment guide lines 72 are located at different angular positions on the display 68, and therefore not all of them are aligned (or indeed close) to the point 76 on the image that corresponds to the location of the bar 14. The number and angular spacing of the plurality of coupling alignment guide lines 72 are selected so that it can be guaranteed that there will always be at least one coupling alignment guide lines 72 that is sufficiently aligned with a point of the image that represents the location of the bar 14. Alternatively, this arrangement may be used where there are a known limited number of pick-up heights, and each coupling alignment guide 72 could represent one of the known pick-up heights. In the embodiment shown in Figure 14, there are five coupling alignment guide lines 72 and the middle one is aligned with the bar 14. The arm 26 is then pivoted into a position in which the hook 28 is aligned with the appropriate coupling alignment guide line 72. When aligned it is known that the hook 28 and bar 14 are at the same height (Z position), assuming that the hook 28 and bar 14 are also laterally aligned (X position). As in the embodiments described above, once aligned, the vehicle 10 can then be driven backwards until it is close enough to the container 12, and then the hydraulic cylinders 34 can be operated to cause the hook 28 and bar to engage so as to haul the container 12 onto the back of the vehicle 10.

In the above described embodiments the coupling alignment guide and the lateral alignment guide are dotted lines displayed over the captured image. However, any suitable alignment guide could be used, providing that it acts as a visual guide to the operator. For example, the coupling alignment guide and/or the lateral alignment guide could be a series of spaced dots, or one or more crosses, or a flashing line, or flashing dots or crosses. The graphical coupling alignment guide and lateral alignment guide are overlaid on top of the captured image, and may be transparent to a certain extent to ensure that the captured image is also visible. The display technique may be known as augmented reality since the "real" live captured image is augmented with additional information in the form of the coupling alignment guide and the lateral alignment guide.

In the embodiments described the coupling alignment guide line passes through the motion perspective vanishing point (i.e. the fixed first point) and also passes through the point on the image corresponding to the bar. However, in other embodiments the coupling guide line may not actually pass through these points. For example, the coupling alignment guide line (or other graphical representation) may extend over a much shorter length and may therefore only be present in the region on the image where the hook (or other first coupling) is. The coupling alignment guide would, however, still be aligned with the first point (motion perspective vanishing point) and the second point corresponding to the position of the bar since if extended along the motion perspective line it would pass through these points. The coupling alignment guide line may be described as being based on a motion perspective line in as much as it is a section, length or other representation of a part of a motion perspective line. When aligned with the second coupling (such as the bar) the coupling alignment guide is a graphical representation of at least part of a motion perspective line that passes through the position of the second coupling on the image displayed. The coupling alignment guide would therefore also be aligned with the motion perspective vanishing point.

The first fixed predefined point has been described as being a motion perspective vanishing point. In the embodiments described above this point is within the image captured and displayed. However, in other embodiments the first point (motion perspective vanishing point) could lie outside of the image captured and would therefore be fixed with respect to the image frame, but not actually within the displayed image. In other words, the motion perspective lines could converge towards a point outside of the captured and displayed image. In other embodiments, the first point which may be termed a motion perspective vanishing point could be at a predefined, although not a fixed position, with respect to the image. For example, if a camera with an optical zoom was used, the motion perspective lines and the motion perspective vanishing point would change depending on the zoom level. In such an arrangement, the processing module 60 would calculate the new position of the fixed point 42 (motion perspective vanishing point) based on the zoom focus distance. The required motion perspective lines and/or coupling alignment guide lines would then be determined or calculated based on this new predefined calculated point 42.

In the embodiments described and shown, the coupling alignment guides, which are based on motion perspective lines, are linear. However, in reality, the motion perspective lines on which the coupling alignment guides are based are likely to be curved since the lens of the image capturing device in unlikely to be able to produce a perfect perspective image. The distortion produced by the lens of the image capturing device is a fixed property of the lens (sometimes referred to as the "fish-eye" effect"). In other words, as the vehicle is moved along a longitudinal axis, a fixed point in space (such as the corner of a container) may follow a curved path on the display as opposed to a linear path. However, the motion perspective vanishing point would still be fixed. Therefore, the coupling alignment guide displayed over the captured image may be a curved line which represents a constant height line at a fixed lateral position. The motion perspective lines used to generate the coupling alignment guides could be determined either using an automatic calibration exercise, or empirically. Since the distortion produced by the lens is a known fixed property, the processing module 60 could calculate or define the coupling alignment guides, whilst taking into account the distortion produced by the lens. This could be done by using a known mathematical function. In another arrangement, the image displayed could be corrected for lens distortion so that a perfect perspective image is displayed. In such a case, the coupling alignment guides would be based on straight motion perspective lines. Of course, in yet another arrangement a matching correction could be applied to both the image and the coupling guide lines. The key would be to ensure that the coupling alignment guide represents a line of constant height 78 is space.
Although it has been described that there is a single image capturing device (i.e. a camera) and a single display, in other embodiments multiple cameras may be used and multiple displays could also be used. For example, a first camera could be provided that is centrally located (i.e. not laterally offset from the hook/first coupling) and the lateral alignment guide line could be superimposed over an image captured by the first camera on the first display. The lateral alignment guide line displayed on the first display could assist the operator in laterally aligning the hook and bar. A second camera could be provided on the vehicle that is laterally offset with respect to the hook/first coupling. The coupling alignment guide line could be superimposed over an image captured by the second camera on the second display. The coupling alignment guide line could assist the operator in vertically aligning the hook and bar. In another arrangement a single display could be used, and the operator could switch between the image captured by the first camera and the image captured by the second offset camera. In yet another arrangement, a single display could be used with a "split-screen" being used to show the outputs of the first and second cameras. In the embodiment described above the lateral alignment guide line is displayed together with the coupling alignment guide line. However, the system could be arranged such that either manually or automatically the guide lines may be turned off. For example, a button could be provided to "toggle" the coupling alignment guide line and the lateral alignment guide line on or off.

In the embodiment described above the guidance system provides visual guidance which assists the operator in both laterally and vertically aligning the hook and the bar (i.e. the first and second couplings). However, in another embodiment, the guidance system may not provide any assistance in lateral alignment. For example, the operator may have to laterally align the vehicle and container by using conventional techniques (e.g. using the wing mirrors or by being assisted by a co-worker). The guidance system may therefore only provide a coupling alignment guide line for assisting in the vertical alignment of the hook and bar.

In the above described embodiments one or more alignment guide lines are overlaid on an image on a display and assist an operator in positioning the vehicle and hook at the correct position. However, the system could be entirely automated such that it requires minimal operator input. For example, the operator could park the vehicle in front of the container and the approximate position, and could then press a button or the like to commence automatic alignment and/or pick-up. The vehicle may then automatically drive itself into a position in which the hook and bar are laterally aligned. This could be done by detecting an alignment marker on the container from an image captured by a camera, and then using this to automatically position the vehicle. Using an image captured by a laterally offset camera, a coupling alignment guide could be determined (although not necessarily displayed). The coupling alignment guide could be based on a motion perspective line aligned with the bar, and the position of the bar could be detected automatically. The arm could then be automatically operated such that the hook aligns with the coupling alignment guide to position it at the correct vertical pick-up height. The vehicle could also reverse itself to the correct spacing away from the container, and the hydraulic cylinders could also be automatically operated to perform the pick-up operation. It should be appreciated that this could all be done without using a display as if automatic it would not be necessary for the operator to observe the operation. Of course, not all steps need to be automatic, and in some embodiments only some of the steps may be automatic. For example, the vehicle could be driven into the correct lateral position by the operator, and the vertical positioning of the hook could be automated.

It has been described that the guidance system is for a hook loader having a moveable hook which can engage with a bar of a container. However, it should be appreciated that any types of engageable couplings could be used. For example, the bar could be provided on the arm of the vehicle and a hook could be provided on the container. Of course, couplings other than hooks and bars could be used. Further, although it has been described that the guidance system is for a hook loader vehicle, it could be used on other vehicles where it is necessary to vertically align a moveable coupling with a fixed coupling.

Some aspects of the above-described apparatus, system and methods, may be embodied as machine readable instructions such as processor control code, for example on a non-volatile carrier medium such as a disk, CD- or DVD-ROM, programmed memory such as read only memory (Firmware), or on a data carrier such as an optical or electrical signal carrier. For some applications, embodiments of the invention will be implemented on a DSP (Digital Signal Processor), ASIC (Application Specific Integrated Circuit) or FPGA (Field Programmable Gate Array). Thus the code may comprise conventional program code or microcode or, for example code for setting up or controlling an ASIC or FPGA. The code may also comprise code for dynamically configuring re-configurable apparatus such as re-programmable logic gate arrays. Similarly the code may comprise code for a hardware description language such as Verilog TM or VHDL (Very high speed integrated circuit Hardware Description Language). The code may be distributed between a plurality of coupled components in communication with one another. Where appropriate, embodiments may also be implemented using code running on a field-(re)programmable analogue array or similar device in order to configure analogue hardware.

## Claims

1. A method for providing guidance for the alignment of a moveable first coupling Z (28) of a vehicle (10) which is moveable with respect to a chassis (16) of the vehicle (10) and a second coupling (14) of a body, the vehicle (10) having a longitudinal axis, the method comprising:
capturing an image which includes the second coupling using an image capturing device (40) fixed with respect to the vehicle (10) and laterally offset with respect to the first coupling; and
displaying the image together with a coupling alignment guide which is aligned with a first point which is at a predefined position with respect to the image.

2. A method according to claim 1, wherein the first point is a vanishing point of the image and optionally wherein the coupling alignment guide is also aligned with a second point in the image which corresponds to the position of the second coupling, optionally, wherein the second point is:
a) manually identified, optionally by using an operator input device; or
b) automatically identified, optionally using an identifier provided on the body.

3. A method according to any of claims 1 or 2, further comprising:
a) displaying an initial coupling alignment guide which is aligned with the first point, and moving the coupling alignment guide until it is also aligned with the second point, optionally wherein the coupling alignment guide is moved using an operator input device; and optionally
b) displaying an initial coupling alignment guide which is aligned with the first point and a third point in the image which corresponds to the position of the first coupling, and moving the coupling alignment guide in response to movement of the first coupling until the coupling alignment guide is also aligned with the second point, optionally wherein the third point is manually identified, manually selected by using an operator input device, or automatically identified, optionally using an identifier provided on the first coupling.

4. A method according to any of claims 1-3, further comprising one or more of::
a) displaying a plurality of coupling alignment guides which are each aligned with the first point, optionally wherein one of the plurality of coupling alignment guides is aligned with a second point in the image which corresponds to the position of the second coupling; and/or
b) moving the first coupling into alignment with the coupling alignment guide to position the first coupling at the correct pick-up height for the second coupling;
c) driving the vehicle (10) into a position in which the first and second couplings are laterally aligned;
d) capturing an image which includes at least a part of the body using an image capturing device fixed with respect to the vehicle (10); and
displaying the image together with a lateral alignment guide which is alignable with a predefined position on the body to laterally align the first and second couplings; and
e) driving the vehicle (10) into a position in which the lateral alignment guide is aligned with the predefined position on the body.

5. A method according to claim 4, wherein:
a) the lateral alignment guide is aligned with a lateral alignment mark (74) provided on the body;
b) the vehicle (10) is driven into a position in which the longitudinal axes of the vehicle (10) and body are substantially parallel;
c) the optical axis of at least one image capturing device is oblique to the longitudinal axis of the vehicle (10); and/or
d) at least one image capturing device is rearwardly facing.

6. A method according to any preceding claim, wherein the first coupling is:
a) moveable only in directions parallel to a plane which includes the longitudinal axis of the vehicle (10) and which is perpendicular to the transverse axis of the vehicle (10);
b) attached to the end of a moveable arm (26); and/or
c) moved using an operator input device or automatically moved

7. A method according to any preceding claim, wherein the vehicle (10) is arranged to lift and/or haul the body onto the vehicle (10) chassis (16), optionally wherein the vehicle (10) is a hook (28) loader vehicle (10) having a hook (28) as the first coupling, and wherein the body is a container (12) having a bar (14) as the second coupling.

8. A guidance system (38) for providing guidance for the alignment of a moveable first coupling (28) of a vehicle (10) which is moveable with respect to a chassis (16) of the vehicle (10), and a second coupling (14) of a body, the vehicle (10) having a longitudinal axis, the system comprising:
an image capturing device (40) arranged to be fixed with respect to the vehicle (10) such that it is laterally offset with respect to the first coupling and arranged to capture an image which includes the second coupling;
a coupling visual guidance module (64) arranged to generate a coupling alignment guide which is aligned with a first point which is at a predefined position with respect to the image; and
a display (68) arranged to display the image and the coupling alignment guide.

9. A system according to claim 8, wherein the first point is a vanishing point of the image, optionally wherein the coupling visual guidance module (64) is arranged to generate a coupling alignment guide which is also aligned with a second point in the image which corresponds to the position of the second coupling.

10. A system according to claim 9, further comprising:
a) an operator input device for manually identifying or manually selecting the second point; or
b) an automatic identification module arranged to automatically identify the second point, optionally wherein the automatic identification module is arranged to automatically identify the second point based on an identifier provided on the body.

11. A system according to any of claims 8-10, wherein the coupling visual guidance module (64) is arranged to generate an initial coupling alignment guide which is aligned with the first point, the system further comprising an operator input device for moving the coupling alignment guide until it is also aligned with the second point, and optionally wherein the coupling visual guidance module (64) is arranged to generate an initial coupling alignment guide which is aligned with the first point and a third point on the image which corresponds to the position of the first coupling, and wherein the coupling visual guidance module (64) is arranged to be responsive to an operator input device for moving the first coupling such that, in use, the coupling alignment guide moves in response to movement of the first coupling.

12. A system according to claim 11, further comprising:
a) an operator input device for manually identifying or manually selecting the third point, or
b) an automatic identification module arranged to automatically identify the third point, optionally wherein the automatic identification module is arranged to automatically identify the third point based on an identifier provided on the first coupling.

13. A system according to any of claims 8-12, wherein the coupling visual guidance module (64) is arranged to generate a plurality of coupling alignment guides which are each aligned with the first point, optionally wherein one of the plurality of coupling alignment guides is aligned with a second point in the image which corresponds to the position of the second coupling.

14. A system according to any of claims 8-13, further comprising one or more of:
a) an operator input device for moving the first coupling into alignment with the coupling alignment guide to position the first coupling at the correct pick-up height for the second coupling;
b) an automatic movement module for automatically moving the first coupling into alignment with the coupling alignment guide to position the first coupling at the correct pick-up height for the second coupling; and
c) an image capturing device arranged to be fixed with respect to the vehicle (10) and arranged to capture an image which includes at least a part of the body;
a lateral visual guidance module (62) arranged to generate a lateral alignment guide which is alignable with a predefined position on the body to laterally align the first and second couplings; and
wherein the display is arranged to display the image and the lateral alignment guide.

15. A vehicle (10) for picking up a body comprising a moveable first coupling arranged to cooperate with a second coupling of the body to be picked up, wherein the vehicle (10) is provided with a guidance system (38) in accordance with any of claims 8-14, wherein an image capturing device is mounted to the vehicle (10) and laterally offset with respect to the first coupling, optionally wherein:
a) the vehicle (10) is arranged to lift and/or haul the body onto the vehicle (10) chassis (16); or
b) the vehicle (10) is a hook (28) loader vehicle (10) having a hook (28) as the first coupling, wherein the hook (28) loader vehicle (10) is arranged to pick up a body in the form of a container (12) having a bar (14) as the second coupling.

## Patentansprüche

1. Verfahren zum Bereitstellen von Führung zur Ausrichtung einer bewegbaren ersten Kupplung (28) eines Fahrzeugs (10), die in Bezug auf ein Fahrgestell (16) des Fahrzeugs (10) bewegbar ist, und einer zweiten Kupplung (14) eines Körpers, wobei das Fahrzeug (10) eine Längsachse aufweist und das Verfahren umfasst:
Erfassen eines Bildes, das die zweite Kupplung beinhaltet, unter Verwendung einer Bilderfassungsvorrichtung (40), die in Bezug auf das Fahrzeug (10) fixiert und in Bezug auf die erste Kupplung seitlich versetzt ist; und
Anzeigen des Bildes zusammen mit einer Kupplungsausrichtungsführung, die mit einem ersten Punkt ausgerichtet ist, der sich an einer vordefinierten Position in Bezug auf das Bild befindet.

2. Verfahren nach Anspruch 1, wobei der erste Punkt ein Fluchtpunkt des Bildes ist und optional wobei die Kupplungsausrichtungsführung auch mit einem zweiten Punkt im Bild ausgerichtet ist, der der Position der zweiten Kupplung entspricht, optional wobei der zweite Punkt wie folgt identifiziert wird:
a) manuell, optional unter Verwendung einer Bedienereingabevorrichtung; oder
b) automatisch, optional unter Verwendung einer auf dem Körper bereitgestellten Kennzeichnung.

3. Verfahren nach einem der Ansprüche 1 oder 2, ferner umfassend:
a) Anzeigen einer anfänglichen Kupplungsausrichtungsführung, die mit dem ersten Punkt ausgerichtet ist, und Bewegen der Kupplungsausrichtungsführung, bis sie auch mit dem zweiten Punkt ausgerichtet ist, optional wobei die Kupplungsausrichtungsführung unter Verwendung einer Bedienereingabevorrichtung bewegt wird; und optional
b) Anzeigen einer anfänglichen Kupplungsausrichtungsführung, die mit dem ersten Punkt und einem dritten Punkt im Bild, der der Position der ersten Kupplung entspricht, ausgerichtet ist, und Bewegen der Kupplungsausrichtungsführung als Reaktion auf die Bewegung der ersten Kupplung, bis die Kupplungsausrichtungsführung auch mit dem zweiten Punkt ausgerichtet ist, optional wobei der dritte Punkt manuell identifiziert, manuell unter Verwendung einer Bedienereingabevorrichtung ausgewählt oder automatisch identifiziert wird, optional unter Verwendung einer an der ersten Kupplung bereitgestellten Kennzeichnung.

4. Verfahren nach einem der Ansprüche 1 bis 3, ferner umfassend einen oder mehrere der folgenden Vorgänge:
a) Anzeigen einer Vielzahl von Kupplungsausrichtungsführungen, die jeweils mit dem ersten Punkt ausgerichtet sind, optional wobei eine der Vielzahl von Kupplungsausrichtungsführungen mit einem zweiten Punkt im Bild ausgerichtet ist, der der Position der zweiten Kupplung entspricht; und/oder
b) Bewegen der ersten Kupplung zur Ausrichtung mit der Kupplungsausrichtungsführung, um die erste Kupplung in der richtigen Aufnahmehöhe für die zweite Kupplung zu positionieren;
c) Fahren des Fahrzeugs (10) in eine Position, in der die erste und die zweite Kupplung seitlich ausgerichtet sind;
d) Erfassen eines Bildes, das mindestens einen Teil des Körpers beinhaltet, unter Verwendung einer in Bezug auf das Fahrzeug (10) fixierten Bilderfassungsvorrichtung; und
Anzeigen des Bildes zusammen mit einer Führung zur seitlichen Ausrichtung, die auf eine vordefinierte Position auf dem Körper ausrichtbar ist, um die erste und die zweite Kupplung seitlich auszurichten; und
e) Fahren des Fahrzeugs (10) in eine Position, in der die Führung zur seitlichen Ausrichtung mit der vordefinierten Position am Körper ausgerichtet ist.

5. Verfahren nach Anspruch 4, wobei:
a) die Führung zur seitlichen Ausrichtung mit einer am Körper bereitgestellten Markierung zur seitlichen Ausrichtung (74) ausgerichtet ist;
b) das Fahrzeug (10) in eine Position gefahren wird, in der die Längsachsen des Fahrzeugs (10) und des Körpers im Wesentlichen parallel sind;
c) die optische Achse mindestens einer Bilderfassungsvorrichtung schräg zur Längsachse des Fahrzeugs (10) verläuft; und/oder
d) mindestens eine Bilderfassungsvorrichtung nach hinten gerichtet ist.

6. Verfahren nach einem der vorhergehenden Ansprüche, wobei Folgendes gilt:
a) die erste Kupplung ist bewegbar nur in Richtungen parallel zu einer Ebene, die die Längsachse des Fahrzeugs (10) beinhaltet und die senkrecht zur Querachse des Fahrzeugs (10) verläuft;
b) die erste Kupplung ist am Ende eines bewegbaren Arms (26) befestigt; und/oder
c) die erste Kupplung wird unter Verwendung einer Bedienereingabevorrichtung bewegt oder automatisch bewegt.

7. Verfahren nach einem der vorhergehenden Ansprüche, wobei das Fahrzeug (10) dafür eingerichtet ist, den Körper auf das Fahrgestell (16) des Fahrzeugs (10) zu heben und/oder zu ziehen, optional wobei das Fahrzeug (10) ein Haken-(28)-Lader-Fahrzeug (10) ist, das einen Haken (28) als die erste Kupplung aufweist, und wobei der Körper ein Container (12) ist, der eine Stange (14) als die zweite Kupplung aufweist.

8. Führungssystem (38) zum Bereitstellen von Führung zur Ausrichtung einer bewegbaren ersten Kupplung (28) eines Fahrzeugs (10), die in Bezug auf ein Fahrgestell (16) des Fahrzeugs (10) bewegbar ist, und einer zweiten Kupplung (14) eines Körpers, wobei das Fahrzeug (10) eine Längsachse aufweist und das System umfasst:
eine Bilderfassungsvorrichtung (40), die dazu eingerichtet ist, in Bezug auf das Fahrzeug (10) fixiert zu sein, und zwar derart, dass sie in Bezug auf die erste Kupplung seitlich versetzt ist, und dazu eingerichtet ist, ein Bild zu erfassen, das die zweite Kupplung beinhaltet;
ein Modul zur visuellen Kupplungsführung (64), das dazu eingerichtet ist, eine Kupplungsausrichtungsführung zu erzeugen, die mit einem ersten Punkt ausgerichtet ist, der sich an einer vordefinierten Position in Bezug auf das Bild befindet; und
eine Anzeige (68), die dazu eingerichtet ist, das Bild und die Kupplungsausrichtungsführung anzuzeigen.

9. System nach Anspruch 8, wobei der erste Punkt ein Fluchtpunkt des Bildes ist, optional wobei das Modul zur visuellen Kupplungsführung (64) dazu eingerichtet ist, eine Kupplungsausrichtungsführung zu erzeugen, die auch mit einem zweiten Punkt im Bild ausgerichtet ist, der der Position der zweiten Kupplung entspricht.

10. System nach Anspruch 9, ferner umfassend:
a) eine Bedienereingabevorrichtung zum manuellen Identifizieren oder manuellen Auswählen des zweiten Punktes; oder
b) ein Modul zur automatischen Identifizierung, das dazu eingerichtet ist, den zweiten Punkt automatisch zu identifizieren, optional wobei das Modul zur automatischen Identifizierung dazu eingerichtet ist, den zweiten Punkt auf der Grundlage einer auf dem Körper bereitgestellten Kennzeichnung automatisch zu identifizieren.

11. System nach einem der Ansprüche 8 bis 10, wobei das Modul zur visuellen Kupplungsführung (64) dazu eingerichtet ist, eine anfängliche Kupplungsausrichtungsführung zu erzeugen, die mit dem ersten Punkt ausgerichtet ist, wobei das System ferner eine Bedienereingabevorrichtung zum Bewegen der Kupplungsausrichtungsführung, bis sie auch mit dem zweiten Punkt ausgerichtet ist, umfasst, und optional wobei das Modul zur visuellen Kupplungsführung (64) dazu eingerichtet ist, eine anfängliche Kupplungsausrichtungsführung zu erzeugen, die mit dem ersten Punkt und einem dritten Punkt auf dem Bild, der der Position der ersten Kupplung entspricht, ausgerichtet ist, und wobei das Modul zur visuellen Kupplungsführung (64) dazu eingerichtet ist, auf eine Bedienereingabevorrichtung zum Bewegen der ersten Kupplung so zu reagieren, dass sich die Kupplungsausrichtungsführung im Gebrauch als Reaktion auf Bewegung der ersten Kupplung bewegt.

12. System nach Anspruch 11, ferner umfassend:
a) eine Bedienereingabevorrichtung zum manuellen Identifizieren oder manuellen Auswählen des dritten Punktes, oder
b) ein Modul zur automatischen Identifizierung, das dazu eingerichtet ist, den dritten Punkt automatisch zu identifizieren, optional wobei das Modul zur automatischen Identifizierung dazu eingerichtet ist, den dritten Punkt auf der Grundlage einer an der ersten Kupplung bereitgestellten Kennzeichnung automatisch zu identifizieren.

13. System nach einem der Ansprüche 8 bis 12, wobei das Modul zur visuellen Kupplungsführung (64) dazu eingerichtet ist, eine Vielzahl von Kupplungsausrichtungsführungen zu erzeugen, die jeweils mit dem ersten Punkt ausgerichtet sind, optional wobei eine der Vielzahl von Kupplungsausrichtungsführungen mit einem zweiten Punkt im Bild, der der Position der zweiten Kupplung entspricht, ausgerichtet ist.

14. System nach einem der Ansprüche 8 bis 13, ferner umfassend eines oder mehrere der folgenden Elemente:
b) eine Bedienereingabevorrichtung zum Bewegen der ersten Kupplung zur Ausrichtung mit der Kupplungsausrichtungsführung, um die erste Kupplung in der richtigen Aufnahmehöhe für die zweite Kupplung zu positionieren;
b) ein Modul für automatische Bewegung zum automatischen Bewegen der ersten Kupplung zur Ausrichtung mit der Kupplungsausrichtungsführung, um die erste Kupplung in der richtigen Aufnahmehöhe für die zweite Kupplung zu positionieren; und
c) eine Bilderfassungsvorrichtung, die dazu eingerichtet ist, in Bezug auf das Fahrzeug (10) fixiert zu sein, und die dazu eingerichtet ist, ein Bild zu erfassen, das mindestens einen Teil des Körpers beinhaltet;
ein Modul zur visuellen seitlichen Führung (62), das dazu eingerichtet ist, eine Führung zur seitlichen Ausrichtung zu erzeugen, die mit einer vordefinierten Position am Körper ausrichtbar ist, um die erste und die zweite Kupplung seitlich auszurichten; und
wobei die Anzeige dazu eingerichtet ist, das Bild und die Führung zur seitlichen Ausrichtung anzuzeigen.

15. Fahrzeug (10) zum Aufnehmen eines Körpers, das eine bewegbare erste Kupplung umfasst, die dazu eingerichtet ist, mit einer zweiten Kupplung des aufzunehmenden Körpers zusammenzuwirken, wobei das Fahrzeug (10) mit einem Führungssystem (38) nach einem der Ansprüche 8 bis 14 bereitgestellt ist, wobei eine Bilderfassungsvorrichtung am Fahrzeug (10) montiert ist und seitlich in Bezug auf die erste Kupplung versetzt ist, optional wobei:
a) das Fahrzeug (10) dazu eingerichtet ist, den Körper auf das Fahrgestell (16) des Fahrzeugs (10) zu heben und/oder zu ziehen; oder
b) das Fahrzeug (10) ein Haken-(28)-Lader-Fahrzeug (10) mit einem Haken (28) als die erste Kupplung ist, wobei das Haken-(28)-Lader-Fahrzeug (10) dazu eingerichtet ist, einen Körper in Form eines Containers (12) mit einer Stange (14) als die zweite Kupplung aufzunehmen.

## Revendications

1. Procédé pour fournir un guidage pour l'alignement d'un premier couplage mobile (28) d'un véhicule (10) qui est mobile par rapport à un châssis (16) du véhicule (10) et un second couplage (14) d'un corps, le véhicule (10) ayant un axe longitudinal, le procédé comprenant :
la capture d'une image qui inclut le second couplage en utilisant un dispositif de capture d'image (40) fixe par rapport au véhicule (10) et latéralement décalé par rapport au premier couplage ; et
l'affichage de l'image conjointement avec un guide d'alignement de couplage qui est aligné avec un premier point qui est à une position prédéfinie par rapport à l'image.

2. Procédé selon la revendication 1, dans lequel le premier point est un point de fuite de l'image et optionnellement dans lequel le guide d'alignement de couplage est également aligné avec un second point dans l'image qui correspond à la position du second couplage, optionnellement, dans lequel le second point est :
a) manuellement identifié, optionnellement en utilisant un dispositif d'entrée opérateur ; ou
b) automatiquement identifié, optionnellement en utilisant un identifiant prévu sur le corps.

3. Procédé selon l'une quelconque des revendications 1 ou 2, comprenant en outre :
a) l'affichage d'un guide initial d'alignement de couplage qui est aligné avec le premier point, et le déplacement du guide d'alignement de couplage jusqu'à ce qu'il soit également aligné avec le deuxième point, optionnellement dans lequel le guide d'alignement de couplage est déplacé en utilisant un dispositif d'entrée opérateur ; et optionnellement
b) l'affichage d'un guide initial d'alignement de couplage qui est aligné avec le premier point et un troisième point dans l'image qui correspond à la position du premier couplage, et le déplacement du guide d'alignement de couplage en réponse au déplacement du premier couplage jusqu'à ce que le guide d'alignement de couplage soit également aligné avec le deuxième point, optionnellement dans lequel le troisième point est manuellement identifié, manuellement sélectionné en utilisant un dispositif d'entrée opérateur, ou automatiquement identifié, optionnellement en utilisant un identifiant prévu sur le premier couplage.

4. Procédé selon l'une quelconque des revendications 1 à 3, comprenant en outre un ou plusieurs de :
a) l'affichage d'une pluralité de guides d'alignement de couplage qui sont chacun alignés avec le premier point, optionnellement dans lequel un de la pluralité de guides d'alignement de couplage est aligné avec un deuxième point dans l'image qui correspond à la position du second couplage ; et/ou
b) le déplacement du premier couplage en alignement avec le guide d'alignement de couplage pour positionner le premier couplage à la hauteur de ramassage correcte pour le second couplage ;
c) la conduite du véhicule (10) dans une position où les premier et second couplages sont latéralement alignés ;
d) la capture d'une image qui inclut au moins une partie du corps en utilisant un dispositif de capture d'image fixe par rapport au véhicule (10) ; et l'affichage de l'image conjointement avec un guide d'alignement latéral qui peut être aligné avec une position prédéfinie sur le corps pour latéralement aligner les premier et second couplages ; et
e) la conduite du véhicule (10) dans une position où le guide d'alignement latéral est aligné avec la position prédéfinie sur le corps.

5. Procédé selon la revendication 4, dans lequel :
a) le guide d'alignement latéral est aligné avec une marque d'alignement latéral (74) prévue sur le corps ;
b) le véhicule (10) est conduit dans une position où les axes longitudinaux du véhicule (10) et du corps sont sensiblement parallèles ;
c) l'axe optique d'au moins un dispositif de capture d'image est oblique à l'axe longitudinal du véhicule (10) ; et/ou
d) au moins un dispositif de capture d'image est tourné vers l'arrière.

6. Procédé selon une quelconque revendication précédente, dans lequel le premier couplage est :
a) mobile seulement dans des directions parallèles à un plan qui inclut l'axe longitudinal du véhicule (10) et qui est perpendiculaire à l'axe transversal du véhicule (10) ;
b) attaché à l'extrémité d'un bras mobile (26) ; et/ou
c) déplacé en utilisant un dispositif d'entrée opérateur ou automatiquement déplacé.

7. Procédé selon une quelconque revendication précédente, dans lequel le véhicule (10) est agencé pour lever et/ou tirer le corps sur le châssis (16) du véhicule (10), optionnellement dans lequel le véhicule (10) est un véhicule (10) chargeur à crochet (28) ayant un crochet (28) en tant que premier couplage, et dans lequel le corps est un conteneur (12) ayant une barre (14) en tant que second couplage.

8. Système de guidage (38) pour fournir un guidage pour l'alignement d'un premier couplage mobile (28) d'un véhicule (10) qui est mobile par rapport à un châssis (16) du véhicule (10), et un second couplage (14) d'un corps, le véhicule (10) ayant un axe longitudinal, le système comprenant :
un dispositif de capture d'image (40) agencé pour être fixe par rapport au véhicule (10) de telle sorte qu'il soit latéralement décalé par rapport au premier couplage et agencé pour capturer une image qui inclut le second couplage ;
un module de guidage visuel de couplage (64) agencé pour produire un guide d'alignement de couplage qui est aligné avec un premier point qui est à une position prédéfinie par rapport à l'image ; et
un dispositif d'affichage (68) agencé pour afficher l'image et le guide d'alignement de couplage.

9. Système selon la revendication 8, dans lequel le premier point est un point de fuite de l'image, optionnellement dans lequel le module de guidage visuel de couplage (64) est agencé pour produire un guide d'alignement de couplage qui est également aligné avec un deuxième point dans l'image qui correspond à la position du second couplage.

10. Système selon la revendication 9, comprenant en outre :
a) un dispositif d'entrée opérateur pour manuellement identifier ou manuellement sélectionner le deuxième point ; ou
b) un module d'identification automatique agencé pour automatiquement identifier le deuxième point, optionnellement dans lequel le module d'identification automatique est agencé pour automatiquement identifier le deuxième point sur la base d'un identifiant prévu sur le corps.

11. Système selon l'une quelconque des revendications 8 à 10, dans lequel le module de guidage visuel de couplage (64) est agencé pour produire un guide initial d'alignement de couplage qui est aligné avec le premier point, le système comprenant en outre un dispositif d'entrée opérateur pour déplacer le guide d'alignement de couplage jusqu'à ce qu'il soit également aligné avec le deuxième point, et optionnellement dans lequel le module de guidage visuel de couplage (64) est agencé pour produire un guide initial d'alignement de couplage qui est aligné avec le premier point et un troisième point sur l'image qui correspond à la position du premier couplage, et dans lequel le module de guidage visuel de couplage (64) est agencé pour répondre à un dispositif d'entrée opérateur pour déplacer le premier couplage de telle sorte que, durant l'utilisation, le guide d'alignement de couplage se déplace en réponse au déplacement du premier couplage.

12. Système selon la revendication 11, comprenant en outre :
a) un dispositif d'entrée opérateur pour manuellement identifier ou manuellement sélectionner le troisième point, ou
b) un module d'identification automatique agencé pour automatiquement identifier le troisième point, optionnellement dans lequel le module d'identification automatique est agencé pour automatiquement identifier le troisième point sur la base d'un identifiant prévu sur le premier couplage.

13. Système selon l'une quelconque des revendications 8 à 12, dans lequel le module de guidage visuel de couplage (64) est agencé pour produire une pluralité de guides d'alignement de couplage qui sont chacun alignés avec le premier point, optionnellement dans lequel un de la pluralité de guides d'alignement de couplage est aligné avec un deuxième point dans l'image qui correspond à la position du second couplage.

14. Système selon l'une quelconque des revendications 8 à 13, comprenant en outre un ou plusieurs de :
a) un dispositif d'entrée opérateur pour déplacer le premier couplage en alignement avec le guide d'alignement de couplage pour positionner le premier couplage à la hauteur de ramassage correcte pour le second couplage ;
b) un module de déplacement automatique pour automatiquement déplacer le premier couplage en alignement avec le guide d'alignement de couplage pour positionner le premier couplage à la hauteur de ramassage correcte pour le second couplage ; et
c) un dispositif de capture d'image agencé pour être fixe par rapport au véhicule (10) et agencé pour capturer une image qui inclut au moins une partie du corps ;
un module de guidage visuel latéral (62) agencé pour produire un guide d'alignement latéral qui peut être aligné avec une position prédéfinie sur le corps pour latéralement aligner les premier et second couplages ; et
dans lequel le dispositif d'affichage est agencé pour afficher l'image et le guide d'alignement latéral.

15. Véhicule (10) pour ramasser un corps, comprenant un premier couplage mobile agencé pour coopérer avec un second couplage du corps destiné à être ramassé, dans lequel le véhicule (10) est pourvu d'un système de guidage (38) selon l'une quelconque des revendications 8 à 14, dans lequel un dispositif de capture d'image est monté sur le véhicule (10) et latéralement décalé par rapport au premier couplage, optionnellement dans lequel :
a) le véhicule (10) est agencé pour lever et/ou tirer le corps sur le châssis (16) du véhicule (10) ; ou
b) le véhicule (10) est un véhicule (10) chargeur à crochet (28) ayant un crochet (28) en tant que premier couplage, dans lequel le véhicule (10) chargeur à crochet (28) est agencé pour ramasser un corps sous la forme d'un conteneur (12) ayant une barre (14) en tant que second couplage.
